# FASCICULE DE BREVET EUROPEEN

(11) **EP 1 101 690 B1**
(45) Date de publication et mention de la délivrance du brevet: **25.01.2006**
(21) Numéro de dépôt: 00403180.3
(22) Date de dépôt: 15.11.2000
(51) Int. Cl.: B62D 25/08

(54) **Face avant technique de véhicule automobile avec mise en référence sur l'aile du véhicule**
Vorderfront eines Kraftfahrzeuges mit Positionierung auf dem vorderen Kotflügel
Front end of an automobile with positionning on the front wing of the vehicle

(30) Priorité: 15.11.1999 FR 9914280
(43) Date de publication de la demande: 23.05.2001
(73) Titulaire: COMPAGNIE PLASTIC OMNIUM, 69007 Lyon (FR); Renault s.a.s., 92100 Boulogne Billancourt (FR)
(72) Inventeur: Cheron, Hugues, 01800 Bourg Saint Christophe (FR); Decker, Laurent, 69100 Villeurbanne (FR); Ghiringhelli, Bruno, 52200 Langres (FR); Liadouze, Alain, 78530 Buc (FR); Durbize, Marc, 78760 Jouars-Pont-De-Chartrain (FR)
(74) Mandataire: Remy, Vincent Noel Paul

(56) Documents cités:
- EP-A- 1 095 845
- FR-A- 2 754 235

## Description

La présente invention concerne une face avant technique du véhicule automobile avec mise en référence sur l'aile du véhicule.

On connaît les faces avant techniques de véhicules automobiles, telles que celle décrite dans EP 0679565, qui sont des structures support destinées à recevoir principalement le radiateur du groupe moteur et différents organes du véhicule tels que les optiques, des réservoirs et des boîtiers électriques ou électroniques.

L'intérêt d'une face avant technique se révèle notamment lors du montage du véhicule, car tous les organes qu'elle supporte peuvent y être fixés en dehors de la chaîne de montage du véhicule, l'ensemble étant ensuite apporté sur le véhicule en une seule opération.

Une face avant technique se fixe sur le châssis du véhicule avec un léger décalage par rapport aux pièces de carrosserie.

Ce décalage n'est pas gênant pour les organes techniques mais interdit de fixer sur la face avant technique des pièces devant coïncider très précisément avec des pièces de carrosserie du véhicule.

Néanmoins, pour obtenir les effets de style des véhicules modernes qui comportent des optiques à affleurement des pièces de carrosserie et des boucliers ou des bas de caisse prolongeant la carrosserie de manière continue à l'avant du vehicule, il serait souhaitable de pouvoir disposer d'une face avant technique dont le positionnement par rapport la caisse du véhicule soit très précis.

On connait par ailleurs, de EP 1095845, une face avant technique selon le préambule de la revendication 1.

Mais une telle face avant technique ne procure pas de solution au problème précité car son positionnement latéral précis n'est pas assuré.

La présente invention vise à fournir une face avant technique de vehicule automobile qui répond ce besoin.

La présente invention a pour objet une face avant technique de véhicule automobile comprenant notamment une traverse supérieure, comportant, au voisinage de l'une des extrémités de ladite traverse, en point de référence permettant son positionnement sur le véhicule, longitudinalement relativement à un point de repérage prévu sur une aile avant du véhicule, par appui du point de référence sur un moyen solidaire du point de réperage, caractérisée par le fait que le point de référence et le moyen sont agencés pour assurer un positionnement à la fois longitudinal et latéral de la face avant technique.

La face avant technique selon l'invention effectue son positionnement longitudinalement et latéralement non pas par rapport au châssis du véhicule, à savoir ses longerons inférieurs et supérieurs, mais par rapport à une aile qui, au moment du montage de la face avant technique sur le véhicule, a déjà été montée sur son châssis.

Le positionnement en hauteur de la face avant technique peut s'effectuer par appui sur un renfort d'aile.

Ce n'est qu'une fois qu'elle a été correctement positionnée sur le véhicule par rapport à l'une de ses ailes, que la face avant technique selon l'invention est fixée sur le châssis du véhicule.

Dans un mode de réalisation particulier de l'invention, pour superposer le point de référence de la face avant technique et le point de repérage de l'aile, on utilise un moyen amovible, de façon à permettre le glissement de l'aile par rapport au châssis notamment dans le cas où cette aile est réalisée en matière plastique et subit des dilatations différentielles importantes.

Par exemple, le point de référence peut être constitué par une encoche qui vient prendre appui sur une broche plantée temporairement dans un orifice prévu dans l'aile.

La broche constitue le moyen de superposition et l'orifice prévu dans l'aile est le point de repérage de la pièce de carrosserie.

Dans un autre mode de réalisation, on utilise une broche fixée dans la doublure d'aile, non amovible mais servant, une fois la face avant technique positionnée, de butée pour le capot. Dans ce cas, la broche est munie, à son extrémité dirigée vers le haut, d'un embout élastique apte à amortir le choc résultant du claquage du capot.

Dans un mode de réalisation particulier de l'invention, la traverse comporte des trous de fixation sur la doublure d'aile du véhicule, qui permettent sa solidarisation sur le châssis du véhicule, une fois qu'elle a été positionnée grâce au repère.

Dans un mode de réalisation particulier de l'invention, la traverse est munie d'une pièce support à chacune de ses extrémités, sous la forme d'un quart avant, qui est une pièce apte à intégrer les optiques du véhicule ainsi que différents autres organes placés généralement sur une face avant technique.

Dans ce mode de réalisation, il est avantageux que le point de référence de la face avant technique se trouve sur l'un des quarts avant.

Ainsi, non seulement on simplifie la réalisation de la traverse, mais surtout on assure le positionnement précis du quart avant par rapport à l'aile, ce qui est très important du fait que c'est le quart avant qui supporte les organes devant être convenablement positionnes par rapport au reste de la carrosserie du véhicule, comme par exemple les optiques.

Etant donné que l'un seulement des quarts avant peut être mis en référence par rapport à l'aile correspondante, on prévoit, selon l'invention, que la géométrie d'ensemble de la face avant technique soit ajustée sur gabarit avant son montage sur le véhicule, afin de garantir que le bon positionnement de l'un des quarts avant par rapport à une aile entraîne automatiquement celui de l'autre quart avant par rapport à l'autre aile.

Pour améliorer la rigidité, de la face avant technique selon ce mode de réalisation, il est avantageux que les pièces-support ou quarts avant soient fixés en même temps que la traverse sur la doublure d'aile.

Dans un mode de réalisation particulier de l'invention, les pièces support prévues à chaque extrémité de la traverse s'étendent jusqu'aux longerons inférieurs du véhicule auquel ils sont également assujettis de sorte qu'ils constituent des jambages qui rigidifient la traverse supérieure en assurant sa solidarisation avec les longerons inférieurs.

L'invention a également pour objet un ensemble d'une aile avant de véhicule automobile, d'une face avant technique et d'un moyen solidaire d'une telle aile tels que décrits ci-dessus. .

Dans le but de mieux faire comprendre l'invention, on va en décrire maintenant un mode de réalisation donné à titre d'exemple non limitatif, en référence au dessin annexé dans lequel :
- La figure 1 est une vue en perspective d'une partie de l'avant d'un véhicule automobile.
- la figure 2 est une vue rapprochée selon la flèche 2 de la figure 1.

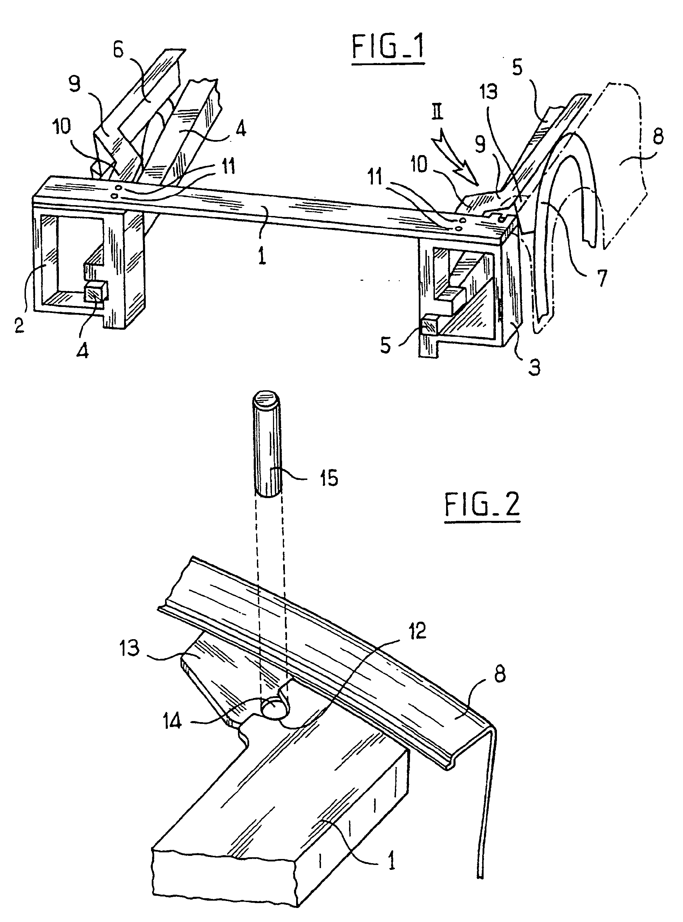

Sur la figure 1, on a représenté une face avant technique constituée par une traverse supérieure 1 et deux pièces-support latérales 2 et 3, deux longerons avant 4 et 5 du véhicule, des doublures d'ailes 6 et 7 et, en trait mixte, l'aile avant gauche 8 du véhicule.

Chaque pièce-support 2,3 est destinée à recevoir une optique ainsi que différents autres organes du véhicule qui ne seront pas détaillés ici.

La traverse supérieure 1 est fixée aux deux pièces-support d'extrémité par vissage.

Chaque pièce-support est à son tour assujettie à l'extrémité avant d'un longeron 4,5.

En partie supérieure de la face avant technique, la traverse est assujettie à un renfort 9 de la doublure d'aile qui est conformé de manière à ce que son extrémité avant 10 vienne se positionner sous la traverse 1.

La fixation de la traverse sur le renfort 9 s'effectue par vissage à travers des orifices 11.

Conformément à l'invention, les fixations qui viennent d'être décrites de la face avant technique sur le véhicule ne sont mises en oeuvre qu'après positionnement précis de la face avant technique par rapport à une pièce de carrosserie, en l'occurrence l'aile avant gauche 8 du véhicule.

A cet effet, la traverse 1 comporte, à son extrémité gauche, une encoche 12 ouverte vers l'intérieur du véhicule.

De son côté, l'aile 8 comporte une plaquette 13 dépassant vers l'intérieur du compartiment moteur, pourvue d'un orifice 14 qui est apte à recevoir une broche amovible 15, comme on le voit à la figure 2, où seules la traverse, la broche et l'aile ont été représentées.

La broche amovible 15 engagée dans l'orifice 14 de l'aile sert de point de repérage pour le point de référence de la face avant technique.

Cette dernière se positionne sur le véhicule en présentant l'encoche 12 de la traverse en regard de la broche 15, ce qui assure son positionnement longitudinal par rapport au véhicule.

Le positionnement vertical est obtenu par appui sur les deux renforts 9.

Une fois la face avant technique convenablement positionnée, on procède aux fixations précédemment décrites sur les renforts 9 ainsi que sur les longerons 4 et 5.

La broche 15 peut ensuite être retirée.

La face avant technique selon l'invention, qui est très précisément mise en référence par rapport à l'aile du véhicule, peut supporter des optiques et un bouclier qui requièrent un positionnement exact par rapport aux autres pièces de carrosserie du vehicule.

Il est bien entendu que le mode de réalisation qui vient d'être décrit ne présente aucun caractère limitatif et qu'il pourra recevoir toute modification désirable sans sortir pour cela du cadre défini par les revendications.

## Revendications

1. Face avant technique de véhicule automobile et son dispositif de positionnement sur le véhicule, la face avant technique comprenant notamment une traverse supérieure (1), le dispositif comportant au voisinage de l'une des extrémités de ladite traverse un point de référence (12) permettant son positionnement sur le véhicule, longitudinalement, relativement à un point de repérage (14) prévu sur une aile avant du véhicule, par appui du point de référence sur un moyen solidaire du point de repérage, **caractérisés par le fait que** le point de référence et le moyen sont agencés pour assurer un positionnement à la fois longitudinal et latéral de la face avant technique.

2. Face avant technique et son dispositif de positionnement sur le véhicule selon la revendication 1, **caractérisés par le fait que** le moyen solidaire du point de repérage est un moyen amovible (15) de superposition, pouvant être retiré.

3. Face avant technique et son dispositif de positionnement sur le véhicule selon la revendication 2, **caractérisés par le fait que** le point de référence est constitué par une encoche (12), qui vient prendre appui sur le moyen amovible constitué par une broche (15) plantée temporairement dans un orifice (14) prévu dans l'aile.

4. Face avant technique et son dispositif de positionnement sur le véhicule selon la revendication 1, **caractérisés par le fait que** le moyen solidaire de l'aile est une broche de superposition fixée dans la doublure d'aile et servant. une fois la face avant technique positionnée, de butée pour le capot.

5. Face avant technique et son dispositif de positionnement sur le véhicule selon l'une quelconque des revendications 1 à 4, **caractérisés par le fait que** la traverse supérieure (1) comporte des trous de fixation (11) sur les doublures d'aile (6, 7) du véhicule.

6. Face avant technique et son dispositif de positionnement sur le véhicule selon l'une quelconque des revendications 1 à 5, **caractérisés par le fait que** la traverse supérieure (1) est munie, à chacune de ses extrémités, d'une pièce-support (2, 3), qui est une pièce apte à intégrer les optiques du véhicule ainsi que les différents autres organes du véhicule.

7. Face avant technique et son dispositif de positionnement sur le véhicule selon la revendication 6, **caractérisés par le fait que** le point de référence se trouve sur une des pièces-support.

8. Face avant technique et son dispositif de positionnement sur le véhicule selon l'une quelconque des revendications 6 et 7, **caractérisés par le fait que** les pièces-support (2, 3) comportent des moyens de fixation sur les doublures d'ailes (6, 7) communs avec des moyens de fixation de la traverse supérieure (1) sur les doublures d'aile (6, 7).

9. Face avant technique et son dispositif de positionnement sur le véhicule selon l'une quelconque des revendications 6 à 8, **caractérisés par le fait que** les pièces-support (2, 3) prévues à chaque extrémité de la traverse s'étendent jusqu'aux longerons inférieurs (4, 5) du véhicule auxquels elles sont également assujetties.

10. Ensemble d'une aile avant de véhicule automobile, d'une face avant technique et d'un moyen solidaire d'une telle aile selon l'une quelconque des revendications 1 à 9.

## Patentansprüche

1. Technische Vorderseite für ein Kraftfahrzeug und ihre Positioniervorrichtung auf dem Fahrzeug, wobei die technische Vorderseite insbesondere eine obere Querstrebe (1) umfasst, wobei die Vorrichtung in der Nähe eines der Enden der Querstrebe einen Referenzpunkt (12) umfasst, der das Positionieren auf dem Fahrzeug längs relativ zu einem Kennzeichnungspunkt (14) erlaubt, der auf einem Vorderflügel des Fahrzeugs vorgesehen ist, durch Aufliegen des Referenzpunkts auf einem Mittel, das fest mit dem Kennzeichnungspunkt verbunden ist, **dadurch gekennzeichnet, dass** der Referenzpunkt und das Mittel eingerichtet sind, um eine Positionierung der technischen Vorderseite gleichzeitig längs und seitlich sicherzustellen.

2. Technische Vorderseite und ihre Positioniervorrichtung auf dem Fahrzeug nach Anspruch 1, **dadurch gekennzeichnet, dass** das fest mit dem Kennzeichnungspunkt verbundene Mittel ein abnehmbares Überlagerungsmittel (15) ist, das entfernt werden kann.

3. Technische Vorderseite und ihre Positioniervorrichtung auf dem Fahrzeug nach Anspruch 2, **dadurch gekennzeichnet, dass** der Referenzpunkt aus einer Kerbe (12) besteht, die auf dem abnehmbaren Mittel zum Aufliegen kommt, bestehend aus einer Spindel (15), die vorübergehend in eine Öffnung (14) gesteckt wird, die in dem Flügel vorgesehen ist.

4. Technische Vorderseite und ihre Positioniervorrichtung auf dem Fahrzeug nach Anspruch 1, **dadurch gekennzeichnet, dass** das fest mit dem Flügel verbundene Mittel eine Überlagerungsspindel ist, die in der Flügelauskleidung befestigt ist und nach dem Positionieren der technischen Vorderseite als Anschlag für die Motorhaube dient.

5. Technische Vorderseite und ihre Positioniervorrichtung auf dem Fahrzeug nach einem der Ansprüche 1 bis 4, **dadurch gekennzeichnet, dass** die obere Querstrebe (1) Befestigungsbohrungen (11) auf den Flügelauskleidungen (6, 7) des Fahrzeugs umfasst.

6. Technische Vorderseite und ihre Positioniervorrichtung auf dem Fahrzeug nach einem der Ansprüche 1 bis 5, **dadurch gekennzeichnet, dass** die obere Querstrebe (1) an jedem ihrer Enden mit einem Trägerteil (2, 3) versehen ist, das ein Teil ist, das die Optiken des Fahrzeugs sowie die verschiedenen anderen Organe des Fahrzeugs aufnehmen kann.

7. Technische Vorderseite und ihre Positioniervorrichtung auf dem Fahrzeug nach Anspruch 6, **dadurch gekennzeichnet, dass** sich der Referenzpunkt auf einem der Trägerteile befindet.

8. Technische Vorderseite und ihre Positioniervorrichtung auf dem Fahrzeug nach einem der Ansprüche 6 und 7, **dadurch gekennzeichnet, dass** die Trägerteile (2, 3) Mittel zum Befestigen auf den Flügelauskleidungen (6, 7) umfassen, die mit den Mitteln zum Befestigen der oberen Querstrebe (1) auf den Flügelauskleidungen (6, 7) gemeinsam sind.

9. Technische Vorderseite und ihre Positioniervorrichtung auf dem Fahrzeug nach einem der Ansprüche 6 bis 8, **dadurch gekennzeichnet, dass** sich die Trägerteile (2, 3), die an jedem Ende der Querstrebe vorgesehen sind, bis zu den unteren Längsstreben (4, 5) des Fahrzeugs erstrecken, mit welchen sie ebenfalls verbunden sind.

10. Vorderflügeleinheit eines Kraftfahrzeugs einer technischen Vorderseite und eines Mittels, das fest mit einem solchen Flügel gemäß einem der Ansprüche 1 bis 9 verbunden ist.

## Claims

1. Motor vehicle functional front end and its device for positioning on the vehicle, the functional front end particularly comprising an upper crossmember (1), the device comprising, near to one of the ends of the said crossmember, a point of reference (12) allowing it to be positioned on the vehicle, longitudinally, with respect to a marking point (14) provided on a front wing of the vehicle, the point of reference (12) resting around a means connected to he marking point, **characterized in that** the point of reference and the means are disposed so that they are able to position the functional front end both longitudinally and laterally.

2. Functional front end and its device for positioning on the vehicle according to claim 1, **characterized in that** the means connected to the marking point is a removable means of superposition (15), able to be removed.

3. Functional front end and its device for positioning on the vehicle according to claim 2, **characterized in that** the point of reference consists of a notch (12) which rests around the removable means constituted by a pin (15) planted temporarily in an orifice (14) made in the wing.

4. Functional front end and its device for positioning on the vehicle according to claim 1, **characterized in that** the means connected to the wing is a superposition pin fixed into the wing lining and which, once the functional front end is in position, serves as a stop for the bonnet.

5. Functional front end and its device for positioning on the vehicle according to any one of claims 1 to 4, **characterized in that** the upper crossmember (1) comprises holes (11) for fixing to the wing linings (6, 7) of the vehicle.

6. Functional front end and its device for positioning on the vehicle according to any one of claims 1 to 5, **characterized in that** the upper crossmember (1) is equipped, at each of its ends, with a support piece (2, 3) which is a piece capable of incorporating the lighting units of the vehicle and various other items of the vehicle.

7. Functional front end and its device for positioning on the vehicle according to claim 6, **characterized in that** the point of reference is on one of the support pieces.

8. Functional front end and its device for positioning on the vehicle according to either one of claims 6 and 7, **characterized in that** the support pieces (2, 3) comprise fixing means to the wing linings (6, 7), common with means for fixing the upper crossmember (1) to the wing linings (6,7).

9. Functional front end and its device for positioning on the vehicle according to any one of claims 6 to 8, **characterized in that** the support pieces (2, 3) provided at each end of the crossmember extend as far as the lower longerons (4, 5) of the vehicle to which they are also secured.

10. The assembly of a front wing of a motor vehicle, of a functional front end and of a mean connected to said wing, according to any one of claims 1 to 9.
